# EUROPÄISCHE PATENTSCHRIFT

(11) **EP 1 467 387 B1**
(45) Veröffentlichungstag und Bekanntmachung des Hinweises auf die Patenterteilung: **07.09.2005**
(21) Anmeldenummer: 03007488.4
(22) Anmeldetag: 07.04.2003
(51) Int. Cl.: H01H 9/18

(54) **Beleuchteter Schalter**
Illuminated electric switch
Interrupteur lumineux

(43) Veröffentlichungstag der Anmeldung: 13.10.2004
(73) Patentinhaber: Feller AG, 8810 Horgen (CH)
(72) Erfinder: Ettlin, Josef, 8807 Freienbach (CH); Risler, Dominik, 8804 Au (CH)
(74) Vertreter: Blum, Rudolf Emil

(56) Entgegenhaltungen:
- EP-A- 0 491 534
- EP-A- 1 014 402
- DE-A- 2 917 367
- DE-U- 6 905 799
- DE-U- 7 802 835
- GB-A- 818 762
- GB-A- 1 001 951
- GB-A- 2 251 980
- US-A- 5 536 543

## Beschreibung

Die Erfindung betrifft einen Leuchtschalter gemäss Oberbegriff des Anspruchs 1.

Leuchtschalter für Hausinstallationen, also z.B. Netzwechselspannung schaltende Leuchtschalter, sind bekannt. Es handelt sich dabei z.B. um Druckschalter, deren Betätigungselement (Taste) frontseitig vollflächig leuchtet, wobei Licht auf nicht speziell beabsichtigte Weise in geringer Intensität auch seitlich aus der Taste austreten kann. Es kann aber auch ein Leuchtelement, z.B. eine Glimmlampe, durch ein Fenster oder eine Linse in der Taste von vorne sichtbar sein. Bei Drehdimmern oder einem Tastenschalter gemäss DE-A-29 17 67 ist auch ein um das Betätigungselement umlaufender, nach vorne leuchtender Kragen bekannt. Beim Drehdimmer gemäss DE-U-78 02 835 wird Licht seitlich ungerichtet abgegeben. Dauernd leuchtende Leuchtschalter dienen dazu, die Schalter bei Dunkelheit sichtbar zu machen, was z.B. bei sogenannten Treppenhausschaltern bekannt ist. US-A-5 536 543 zeigt einen Schalter mit nach vorne leuchtenden Symbolen, bei dem gegebenenfalls auch ein ungerichteter seitlicher Lichtaustritt möglich ist.

Auch im Wohnbereich kann es angenehm sein, wenn Schalter durch Beleuchtung gut sichtbar gemacht werden, indes können dabei die herkömmlichen Leuchtschalter bei reduzierter Umgebungsbeleuchtung, z.B. bei gedimmten Lichtquellen und besonders bei Dunkelheit (Schlafzimmer) sehr störend sein. Ferner können die herkömmlichen Leuchtschalter für den Wohnbereich ästhetisch unbefriedigend sein.

Der Erfindung liegt die Aufgabe zu Grunde, einen verbesserten Leuchtschalter zu schaffen.

Dies wird bei einem Leuchtschalter der eingangs genannten Art mit den kennzeichnenden Merkmalen des Anspruchs 1 erreicht.

Dadurch, dass die Lichtquelle direkt oder durch eine dafür vorgesehene Lichtführungsanordnung die Frontplatte des Schalters beleuchtet, dient nun die von aussen beleuchtete Frontplatte des Schalters als das Leuchtfeld, das den Schalter im Dunkeln sichtbar macht. Das Licht der Lichtquelle tritt dabei vorzugsweise nicht direkt nach vorne gerichtet aus dem Schalter aus; die Frontplatte ergibt indes eine von vorne sichtbare beleuchtete Fläche des Schalters, die sich als weniger störend erweist als die herkömmlich punktuell leuchtenden oder durchleuchteten Tasten von Leuchtschaltern. Die Wahl des Materials und der Farbe der Frontplatte macht ferner bei unveränderter Lichtquelle eine einfache Beeinflussung der Lichtwirkung möglich. Ferner ergibt die Beleuchtung der Frontplatte, insbesondere bei vorzugsweise unbeleuchteter Frontseite der Taste, einen ästhetisch vorteilhaften Eindruck.

Es ist möglich, zusätzlich zu der beleuchteten Frontplatte, die Frontseite der Taste ebenfalls zu beleuchten. Erfolgt dies durch eine weitere Lichtquelle, so können zusätzliche Funktionen und Lichtwirkungen erzielt werden. So kann die Taste betätigungsabhängig beleuchtet werden und so z.B. bei deaktiviertem, am Schalter angeschlossenen Verbraucher nicht leuchten, während die Frontplattenbeleuchtung aktiv ist. Die Taste kann aber bei aktiviertem Verbraucher leuchten. Die Beleuchtung der Taste kann dabei z.B. viel stärker gewählt werden als die Beleuchtung der Frontplatte. Zusätzlich zur Frontplatte kann ein diese umgebender Rahmen beleuchtet sein.

Im folgenden werden Ausführungsbeispiele der Erfindung anhand der Zeichnungen näher erläutert. Dabei zeigt
Figur 1 eine schaubildliche Ansicht eines Leuchtschalters gemäss der Erfindung;
Figur 2 eine Schnittdarstellung durch einen Teil eines Leuchtschalters gemäss der Erfindung; und
   Figur 3 eine schaubildliche Darstellung von teilweise geschnittenen Elementen eines Leuchtschalters.

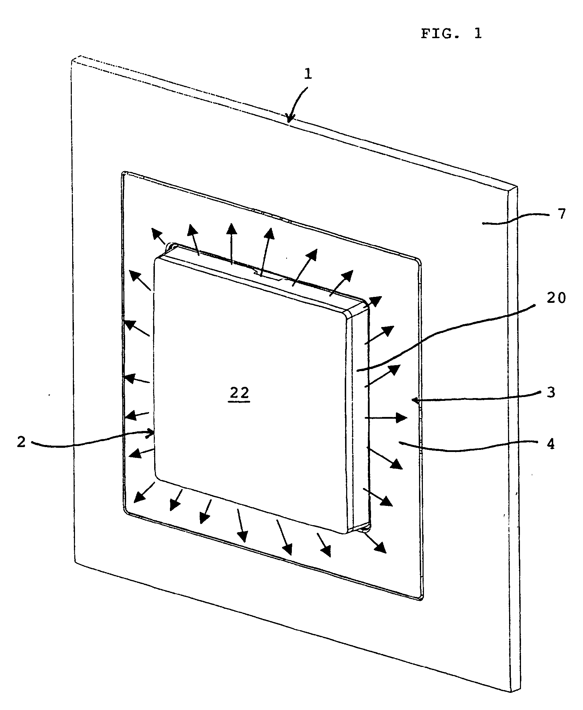

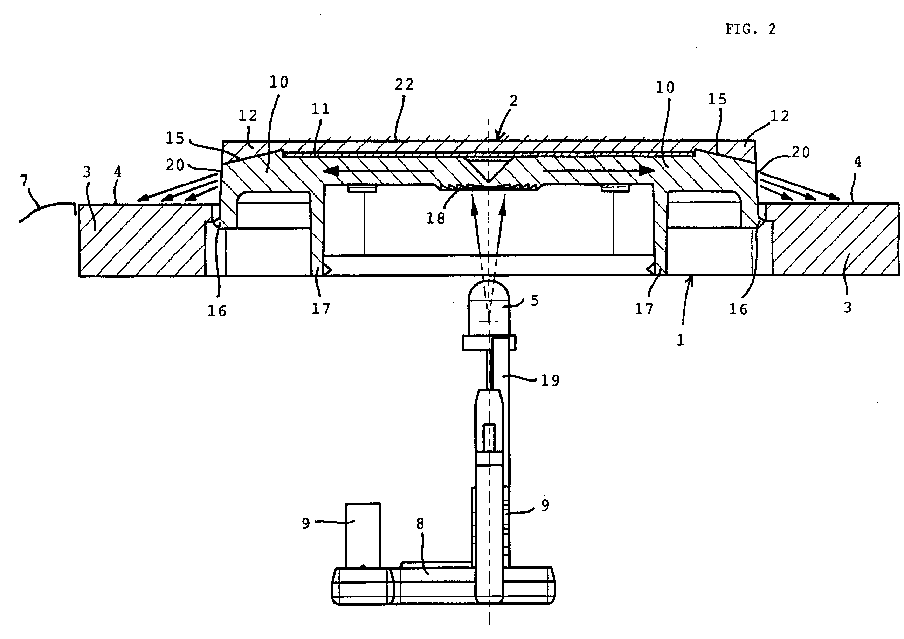

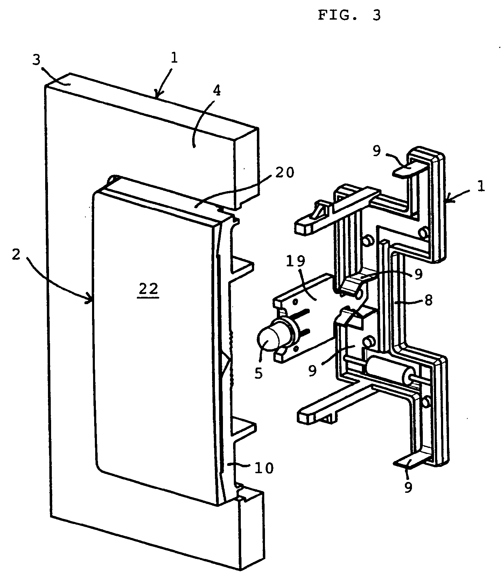

Figur 1 zeigt in schaubildlicher Darstellung ein Beispiel eines erfindungsgemässen Leuchtschalters. Die Leuchtschalter gemäss der Erfindung sind Schalter für Hausinstallationen und sind somit in der Regel für Netzwechselspannung ausgelegt. Die Schaltmittel eines solchen Schalters sind bekannt und werden nachfolgend nicht weiter erläutert bzw. es werden nur diejenigen Teile der Schalter gezeigt, die mit deren Beleuchtung zu tun haben. Schalter gemäss der Erfindung können als Schalter zur Unterputzmontage oder zur Aufputzmontage ausgestaltet sein, was grundsätzlich bekannt ist und hier auch nicht weiter erläutert wird. Es kann sich um Einzelschalter handeln oder um Mehrfachschalter, welche auch mit anderen Apparaten der Hausinstallation, z.B. mit Steckdosen, kombiniert sein können. Auch solches ist für diese Art von Schaltern grundsätzlich bekannt und wird hier nicht mehr erläutert. Figur 1 zeigt einen Einfachschalter, der ein einzelnes Betätigungselement 2 aufweist. Im gezeigten Beispiel ist der Schalter ein Druckschalter, so dass das Betätigungselement 2 eine Drucktaste ist. Natürlich sind auch andere Arten von Schaltern, z.B. Drehdimmer, gemäss der Erfindung ausführbar. Der Schalter weist neben dem Betätigungselement 2 eine Frontplatte 3 auf, von der in Figur 1 nur die Oberfläche 4 ersichtlich ist. In den weiteren Figuren 2 und 3 ist die Frontplatte, die insbesondere Teil des Schaltergehäuses ist, näher ersichtlich. Weitere Elemente des Schalters, welche für die Beleuchtung unwesentlich sind, sind nicht gezeigt, wie dies schon erwähnt worden ist. Der in Figur 1 gezeigte Schalter weist weiter einen Rahmen 7 auf, welcher an die Frontplatte 3 anschliesst und nur als Beispiel einer Schalterausführung zu verstehen ist, d.h. ein solcher Rahmen 7 ist nur fakultativ vorhanden. Gemäss der Erfindung wird nun die Frontplatte 3 des Schalters von aussen beleuchtet, wozu Licht auf deren Oberfläche 4 gestrahlt wird. In dem bezeigten Beispiel erfolgt dies derart, dass Licht, welches durch die Pfeile in Figur 1 und 2 symbolisiert wird, so geleitet wird, dass es seitlich aus der Seitenwand 20 des beweglichen Betätigungselementes 2 austritt und auf die Frontplatte 3, 4 fällt. Das Licht wird dabei auf die Frontplatte 3, 4 gerichtet, was noch erläutert wird. In dem gezeigten Beispiel ist die Frontseite 22 des Betätigungselementes 2 lichtundurchlässig und leuchtet nicht, so dass die von vorne ersichtliche Beleuchtung des Schalters 1 lediglich durch die Beleuchtung der Frontplatte 3, 4 von aussen her erfolgt. Bei Betrachtung von der Seite kann das seitlich aus dem Betätigungselement austretende Licht auch direkt wahrgenommen werden, bei Betrachtung von vorne ist dies indes nicht der Fall, da bevorzugterweise kein Licht aus der Lichtquelle oder über die Lichtführungsanordnung direkt nach vorne entgegen der Betätigungsrichtung abgestrahlt wird. Die dargestellte Ausführungsform, bei welcher das Licht seitlich aus dem Betätigungsselement selber austritt, ist nur als Beispiel zu verstehen. Es kann auch eine Beleuchtung separat vom Betätigungselement vorgesehen sein, welche von aussen her die Frontplatte 3, 4 beleuchtet. In diesem Falle könnte z.B. ein kragenförmiges Element zwischen dem Betätigungselement 2 und der Frontplatte 3, 4 vorgesehen sein, welches unabhängig vom Betätigungselement ist und das Licht auf die Frontplatte wirft. Ein solches Element könnte aber auch zwischen der Frontplatte 3, 4 und dem Rahmen 7 vorgesehen sein. Die Beleuchtung der Frontplatte kann durch Lichtquellen erfolgen, welche direkt Licht auf die Frontplatte strahlen, wozu z.B. in der Seitenwand 20 des Betätigungselementes eine Mehrzahl von Leuchtdioden so angeordnet sein könnten, dass sie Licht direkt auf die Frontplatte abgeben. Bevorzugt ist eine Abgabe des Lichts aus einer zentralen Lichtquelle über eine Lichtführungsanordnung, insbesondere einen Lichtleiter, was noch näher beschrieben wird. Die Wirkung der Beleuchtung der Frontplatte 3 kann durch deren Oberflächengestaltung, insbesondere deren Oberflächenstruktur und deren Farbe beeinflusst werden. Das Licht selber kann farbig sein, z.B. Licht einer blau leuchtenden Leuchtdiode oder kann auch in verschiedenen, wählbaren Farben abgebbar sein, wie dies z.B. mit einer verschieden farbig leuchtenden Leuchtdiode möglich wäre. In einer Ausführungsform wird die Oberfläche 4 der Frontplatte 3 möglichst gleichmässig beleuchtet, wie dies in Figur 1 mit den Pfeilen angedeutet ist. Es ist indes auch möglich die Oberfläche 4 ungleichmässig zu beleuchten oder auch bestimmte Muster oder auch Beschriftungen mittels des Lichtes auf der Oberfläche 4 zu erzeugen. Dazu kann die Lichtaustrittsfläche 20 entsprechend modifiziert werden, insbesondere teilweise lichtundurchlässig gestaltet werden. Es können auch Mittel zur Brechung des Lichtes, z.B. Prismen, verwendet werden, welche aus weissem Licht, z.B. aus einer Leuchtdiode, ein vielfarbiges Brechungsmuster zur Beleuchtung der Frontplatte erzeugen.

Bevorzugterweise tritt das die Oberfläche 4 beleuchtende Licht nicht nach vorne entgegen der Betätigungsrichtung aus, so dass die Lichtquelle nicht direkt von vorne beobachtet werden kann. Ferner ist in einer bevorzugten Ausführungsform die Frontseite 22 des Betätigungselementes 2 unbeleuchtet. Diese kann indes zusätzlich auch beleuchtet sein, wozu dieselbe Lichtquelle oder vorzugsweise eine andere Lichtquelle verwendet werden kann, wie für die Beleuchtung der Oberfläche 4. Die Tastenoberfläche 22 wird dabei vorzugsweise von hinten her durchleuchtet, wie dies grundsätzlich bei Leuchttasten nach Stand der Technik bekannt ist. Die Beleuchtung der Fläche 22 kann indes in Kombination mit der Beleuchtung der Fläche 4 wesentlich schwächer als bekannt gewählt werden, da die grosse beleuchtete Gesamtfläche der Flächen 22 und 4 eine gute Sichtbarkeit auch bei geringer Beleuchtungsstärke ergibt. Zudem soll durch die Beleuchtung der Fläche 22 der Effekt der beleuchteten Fläche 4 nicht gestört werden und keine Störung in einem Wohnraum durch die Beleuchtung der Fläche 22 erzeugt werden. Diese Beleuchtung kann somit auch durch ein schwaches Leuchtmittel, z.B. durch eine Elektroluminiszenzfläche erzeugt werden und sie kann gleichfarbig oder andersfarbig gewählt werden als die Beleuchtung der Fläche 4. Vorzugsweise erfolgt beim Vorsehen einer Beleuchtung der Fläche 22 dies ohnehin nur so, dass diese Beleuchtung von der Betätigung des Schaltelementes des Schalters 1 abhängig ist, während die Beleuchtung der Fläche 4 als vom Schaltelement unabhängige Dauerbeleuchtung ausgestaltet ist. Die Fläche 22 wird dann nur beleuchtet, wenn der vom Schaltelement bediente Verbraucher, z.B. eine Zimmerbeleuchtung, aktiviert ist. In diesem Falle stört auch eine helle Beleuchtung der Fläche 22 nicht. Ist die Zimmerbeleuchtung durch den Schalter 1 deaktiviert worden, so ist auch die Beleuchtung der Fläche 22 nicht aktiv, so dass im dunklen Zimmer nur die bevorzugte Beleuchtung der Oberfläche 4 der Frontplatte 3 wirksam ist.

Die Figuren 2 und 3 zeigen Ansichten von einer besonders bevorzugten Ausführungsform, bei welcher gleiche Bezugszeichen wie bis anhin verwendet wiederum gleiche Elemente bezeichnen. Die Figuren 2 und 3 zeigen nur Teile eines Schalters 1, wobei insbesondere die eigentlichen Schaltmittel zur Schaltung des Verbrauchers nicht dargestellt sind. Diese sind indes herkömmlich ausgeführt und dem Fachmann bekannt und müssen hier nicht weiter erläutert werden. In den Figuren ersichtlich ist die Frontplatte 3 mit ihrer Oberfläche 4 und in Figur 2 ist zudem der Rahmen 7 angedeutet. Die Figuren 2 und 3 zeigen die Frontplatte 3, 4, die insbesondere Teil des nicht weiter dargestellten Schalter- bzw. Apparategehäuses ist, in Schnittdarstellung. In der Frontplatte eingesetzt ist das Betätigungselement 2, welches bei Betätigung auf die nicht dargestellten Schaltmittel einwirkt und durch die Kraft nicht dargestellter Federmittel in der gezeigten, von der Frontplatte 3 nach vorne abstehenden Position gehalten wird. Bei der Betätigung des Schalters 1 wird das Betätigungselement 2 durch Druck auf dessen Frontseite 22 in Figur 2 nach unten gedrückt, um den Schalter zu betätigen. Nach der Betätigung nimmt das Element 2 wieder die gezeigte Position ein. Umlaufende Haltemittel 16 halten das Betätigungselement 2 in der Frontplatte 3 gegen ein Herausfallen nach vorne. Betätigungsmittel 17 des Betätigungselementes 2 wirken auf die nicht dargestellte Schalteranordnung ein. Mindestens eine Lichtquelle, vorliegend die Leuchtdiode 5, ist im Gehäuse des Schalters vorzugsweise feststehend angeordnet. In den Figuren ist dazu die Leuchtdiode 5 in einer Steckhalterung 19 dargestellt, mittels welcher sie an der im Gehäuse fest angeordneten Kontaktträgeranordnung 8 mit den Kontakten und Leitern 9 befestigt ist, so dass die Leuchtdiode mit der Spannungsversorgung verbunden ist. Diese wird vorzugsweise von der Netzwechselspannung abgeleitet, z.B. über einen Vorwiderstand, wie in Figur 3 angedeutet. Die Halterung der Leuchtdiode 5 in einer Steckfassung erlaubt deren einfache Auswechslung wenn dies, z.B. zum Wechseln der Farbe des abgestrahlten Lichtes, erwünscht ist. Im gezeigten Beispiel wird das Licht der Lichtquelle 5 über eine Lichtführungsanordnung von aussen auf die Frontplatte 3 bzw. deren Oberfläche 4 geleitet. Die Lichtführungsanordnung kann aus beliebigen Elementen bestehen, welche zum Leiten und/oder Umlenken von Licht geeignet sind. Es kann sich z.B. um eine Spiegel- bzw. Reflektoranordnung und/oder Linsen handeln. Vorzugsweise wird indes eine Lichtleiteranordnung mit einem Lichtleiterelement 10 verwendet. Lichtleiter aus durchsichtigem Kunststoff sind bekannt. Sie leiten in sie eingestrahltes Licht durch Reflexion an ihren inneren Grenzflächen weiter und entlassen das Licht z.B. an entsprechend vorgesehenen Stirnflächen. Im gezeigten Beispiel strahlt das Licht der Lichtquelle 5, vorzugsweise über eine Fresnel-Linsenanordnung 18, in den Lichtleiter 10 ein und wird (angedeutet durch die Pfeilrichtung) im Lichtleiter verteilt, wobei dies vorzugsweise durch die entsprechende Ausgestaltung des Lichtleiters in alle Richtungen gleichmässig erfolgt, wie dies in Figur 1 dargestellt worden ist. An der Stirnfläche des Lichtleiters, welche vorliegend zugleich die Seitenwand 20 des Betätigungselementes 2 bildet, tritt das Licht aus dem Lichtleiter aus und beleuchtet die Oberfläche 4, wie das auch in Figur 2 mit den Pfeilen angedeutet ist. Die Abschrägung 15 des Lichtleiters 10 benachbart der Oberfläche 4 bewirkt dabei durch eine Änderung des Reflexionswinkels gegenüber den mittleren Teilen des Lichtleiters eine Ausrichtung des aus dem Lichtleiter austretenden Lichtes bevorzugt auf die Fläche 4, wie dies durch die Pfeile angedeutet ist. Entsprechend verringert sich der Anteil von in anderer Richtung austretenden Lichtes. Eine lichtundurchlässige Schicht 11 ist vorzugsweise zum Lichtleiter hin reflektierend ausgestaltet, um den Lichtleitereffekt zu verbessern und dient weiter dazu ein Durchscheinen von Licht durch den Aufsatz 12 auf dem Lichtleiter 10 zu verhindern, so dass die Oberfläche 22 des Betätigungselementes 2, die von der Oberfläche des Aufsatzes 12 gebildet wird, in diesem Beispiel unbeleuchtet bleibt bzw. nicht von aus der Lichtquelle 5 stammenden Licht von hinten durchstrahlt wird. Die Schicht 11 könnte sich dabei auch bis in den abgeschrägten Bereich 15 erstrecken. Bei dieser bevorzugten Ausführungsform besteht also die Drucktaste aus drei Teilen, wobei der Lichtleiter 10 eine Doppelfunktion hat. Zum einen leitet er auf die beschriebene Weise das Licht nach aussen und zum anderen dient er als Verbindungselement zwischen der Frontplatte 3 und der Taste indem er die Halterungen 16 ausbildet. Weiter bildet er auch die Betätigungsteile 17 für die Schaltelemente aus. Das weitere Teil ist der beschriebene Reflektor und das dritte Teil die erwähnte Abdeckung 12. Diese kann beliebig farblich gestaltet und auf die Oberfläche 4 der Frontplatte 3 abgestimmt werden. Wie erwähnt kann auch eine Beleuchtung des Betätigungselementes 2 durch die Taste hindurch vorgesehen werden. Dazu könnte z.B. bewusst auf die lichthemmende Schicht 11 verzichtet werden und durch entsprechende Ausgestaltung des Lichtleiters ein Austreten von Licht nach vorne und durch die Abdeckung 12 hindurch gefördert werden. In diesem Falle wäre die Lichtquelle 5 dieselbe für die Beleuchtung der Tastenoberfläche 22 und der Frontplattenoberfläche 4. Die Schicht 11 könnte indes auch als Elektroluminiszenzschicht ausgebildet sein, welche nach vorne hin durch die mehr oder weniger transparente Abdeckung 12 hin leuchtet und eine von der Lichtquelle 5 separate Lichtquelle bildet. Natürlich sind auch alle anderen möglichen Ausgestaltungen von Lichtquellen für die Beleuchtung der Taste 2 möglich, wenn eine solche gewünscht wird. Bei der gezeigten bevorzugten Ausführungsform kann die Drucktaste 2 in einem Spritzgussverfahren hergestellt werden.

Die Beleuchtung von aussen auf die Frontplatte auf die beschriebenen Arten kann sich auch bis auf den Rahmen 7 erstrecken, wenn ein solcher vorgesehen ist, so dass auch der Rahmen 7 als leuchtendes Element des Leuchtschalters wirkt.

## Patentansprüche

1. Leuchtschalter (1) für Hausinstallationen, ausgestaltet zur Unterputzmontage oder Aufputzmontage, umfassend mindestens ein Schalterbetätigungselement (2) und eine dieses mindestens teilweise umgebende Frontplatte (3, 4) sowie mindestens eine Lichtquelle (5), **dadurch gekennzeichnet, dass** das Licht der Lichtquelle zur Frontplatte hin gerichtet abgegeben wird, wobei die Lichtquelle direkt oder über eine dazu vorgesehene Lichtführungsanordnung (10, 11), welche Mittel aufweist, um das Licht schräg von oberhalb gegen die Frontplatte (3, 4) zu richten, die Frontplatte von aussen beleuchtet, derart, dass die beleuchtete Frontplatte als Leuchtfeld des Schalters eingesetzt ist.

2. Leuchtschalter nach Anspruch 1, **dadurch gekennzeichnet, dass** die Frontplatte (3, 4) weiter mindestens teilweise von einem Rahmen (7) umgeben ist, und dass die Lichtquelle auch den Rahmen (7) beleuchtet, derart, dass auch der Rahmen ganz oder teilweise als Leuchtfeld wirkt.

3. Leuchtschalter nach Anspruch 1 oder 2, **dadurch gekennzeichnet, dass** die Frontseite (22) des Betätigungselementes (2) unbeleuchtet ist.

4. Leuchtschalter nach Anspruch 1, **dadurch gekennzeichnet, dass** die Frontseite (22) des Betätigungselementes (2) durch die genannte Lichtquelle oder durch eine separate weitere Lichtquelle ebenfalls beleuchtbar ist.

5. Leuchtschalter nach Anspruch 4, **dadurch gekennzeichnet, dass** die Beleuchtung der Frontplatte (3, 4) und allenfalls des Rahmens (7) unabhängig von der Schalterstellung erfolgt und die Aktivierung der Beleuchtung der Frontseite (22) des Betätigungselementes (2) abhängig von der Betätigung des Betätigungselementes (2) erfolgt.

6. Leuchtschalter nach einem der Ansprüche 1 bis 5, **dadurch gekennzeichnet, dass** die Beleuchtung der Frontplatte (3, 4) und allenfalls des Rahmens (7) im wesentlichen vollflächig erfolgt oder dass nur Teilflächen der Frontplatte bzw. des Rahmens beleuchtet werden.

7. Leuchtschalter nach einem der Ansprüche 1 bis 6, **dadurch gekennzeichnet, dass** die beleuchtete Frontplatte bzw. der Rahmen gleichmässig oder ungleichmässig ausgeleuchtet wird, insbesondere mit durch die Beleuchtung erzeugten Mustern oder Beschriftungen.

8. Leuchtschalter nach einem der Ansprüche 1 bis 7, **dadurch gekennzeichnet, dass** die Lichtführungsanordnung (10) das Licht zur Beleuchtung der Frontplatte (3, 4) und allenfalls des Rahmens (7) an der Seitenwand (20) des Betätigungselementes (2) abgibt.

9. Leuchtschalter nach Anspruch 8, **dadurch gekennzeichnet, dass** das Licht entlang des gesamten Umfanges des Betätigungselementes (2) oder nur entlang eines Teils des Umfanges des Betätigungselementes (2) abgegeben wird.

10. Leuchtschalter nach einem der Ansprüche 1 bis 9, **dadurch gekennzeichnet, dass** die Lichtführungsanordnung einen Lichtleiter (10) umfasst.

11. Leuchtschalter nach Anspruch 10, **dadurch gekennzeichnet, dass** der Lichtleiter (10) einen Teil des Betätigungselementes (2) bildet und insbesondere mindestens ein Funktionselement (16, 17) zur Betätigung des Betätigungsteils bildet.

12. Leuchtschalter nach Anspruch 10 oder 11, **dadurch gekennzeichnet, dass** der Lichtleiter (10) zusammen mit einer Abdeckung (12), die die Frontseite (22) des Betätigungselementes bildet, und gegebenenfalls mit einer zwischen Lichtleiter (10) und Abdeckung (12) angeordneten Schicht (11) das Betätigungselement (2) bildet.

13. Leuchtschalter nach Anspruch 12, **dadurch gekennzeichnet, dass** die Schicht (11) zum Lichtleiter (10) hin lichtreflektierend ausgebildet ist.

14. Leuchtschalter nach einem der Ansprüche 10 bis 13, **dadurch gekennzeichnet, dass** der Lichtleiter (10) die Mittel aufweist, um das Licht schräg von oberhalb gegen die Frontplatte (3, 4) und allenfalls den Rahmen (7) zu richten.

15. Leuchtschalter nach Anspruch 14, **dadurch gekennzeichnet, dass** der Lichtleiter (10) als Mittel zur Richtung des Lichtes an seiner Oberseite benachbart der Frontplatte (3, 4) eine Abschrägung (15) aufweist.

16. Leuchtschalter nach einem der Ansprüche 1 bis 15, **dadurch gekennzeichnet, dass** die Lichtquelle eine Leuchtdiode ist, insbesondere eine blau leuchtende Leuchtdiode, deren Licht insbesondere über ein Kopplungsmittel (18) in die Lichtführungsanordnung eingeführt wird, insbesondere mittels einer Fresnellinse (18) in einen Lichtleiter (10) eingeführt wird.

17. Leuchtschalter nach einem der Ansprüche 1 bis 16, **dadurch gekennzeichnet, dass** die Lichtquelle und/oder die Lichtführungsanordnung, die insbesondere einen Lichtleiter umfasst, Lichtbrechungsmittel aufweist, insbesondere Prismen, wodurch ein mehrfarbiges Muster auf der Frontplatte und allenfalls dem Rahmen erzeugbar ist.

## Claims

1. Illuminated switch (1) for domestic installations, adapted for wall flush-mounting or surface-mounting, comprising at least one switch actuation element (2) and a front cover (3,4) which surrounds the switch actuation element at least partly, and at least one light source (5), **characterised in that** the light of the light source is emitted directed towards the front cover so that the light source illuminates the front cover from outside, either directly or via a light guiding arrangement (10, 11) having means for directing the light obliquely from above towards the front cover (3,4), so that the illuminated front cover is used as illuminated area of the switch.

2. Illuminated switch according to claim 1, **characterised in that** the front cover (3, 4) is additionally at least partly surrounded by a frame (7) and that the light source illuminates the frame as well, such that the frame acts as a whole or partly as illuminated area as well.

3. Illuminated switch according to claim 1 or 2 **characterised in that** the front part (22) of the actuation element (2) is unlighted.

4. Illuminated switch according to claim 1, **characterized in that** the front part (22) of the actuation element is illuminatable by said light source or by a separate further light source as well.

5. Illuminated switch according to claim 4, **characterised in that** the illumination of the front cover (3, 4) and as the case may be the frame (7) is independent of the switch position and that the activation of the illumination of the front part (22) of the actuation element (2) is dependent of the activation of the actuation element (2).

6. Illuminated switch according to one of claims 1 to 5, **characterised in that** the front cover (3, 4) and as the case may be the frame (7) is illuminated substantially over its entire surface or **in that** only parts of the surfaces of front cover or frame, respectively, are illuminated.

7. Illuminated switch according to one of claims 1 to 6 **characterised in that** the illuminated front cover or frame, respectively is illuminated substantially evenly or unevenly and in particular with patterns or signs generated by the illumination.

8. Illuminated switch according to one of claims 1 to 7, **characterised in that** the light-guiding arrangement (10) emits the light for illuminating the front cover (3, 4) and as the case may be the frame (7) from the side wall (20) of the actuation element (2).

9. Illuminated switch according to claim 8 in that the light is emitted along the whole circumference of the actuation element (2) or only along a part of the circumference of the actuation element (2).

10. Illuminated switch according to one of claims 1 to 9, **characterised in that** the light guide arrangement comprises a light guide (10).

11. Illuminated switch according to claim 10, **characterised in that** the light guide (10) is part of the actuation element (2) and is in particular at least one functional element (16, 17) for actuation of the switch.

12. Illuminated switch according to claim 10 or 11, **characterised in that** the light guide (10) forms the actuation element (2) together with a cover (12), which acts as front part (22) of the actuation element (2), and as the case may be together with a layer (11) arranged between light guide (10) and cover (12).

13. Illuminated switch according to claim 12, **characterised in that** the layer (11) is a layer that reflects light towards the light guide (10).

14. Illuminated switch according to one of claims 10 to 13, **characterised in that** the light guide (10) comprises the means to direct the light obliquely from above towards the front cover (3, 4) and as the case may be the frame (7).

15. Illuminated switch according to claim 14, **characterised in that** the light guide (10) is provided on its surface adjacent the front cover (3, 4) with a taper (15) as means for directing the light.

16. Illuminated switch according to one of claims 1 to 15, **characterised in that** the light source is a light emitting diode, in particular a blue light emitting diode, the light of which is in particular introduced into the light guiding arrangement by a coupling means (18), and in particular is introduced in a light guide (10) by a Fresnel lens.

17. Illuminated switch according to one of claims 1 to 16, **characterised in that** the light source and/or the light guiding arrangement, provided in particular with a light guide, comprises light refraction means, in particular prisms, whereby a multi-coloured pattern is generatable on the front cover and as the case may be on the frame.

## Revendications

1. Interrupteur (1) lumineux pour des installations intérieures conformé pour le montage encastré ou le montage en saillie, comprenant au moins un élément (2) d'actionnement de l'interrupteur et une plaque (3, 4) avant l'entourant au moins en partie, ainsi qu'au moins une source (5) lumineuse, **caractérisé en ce que** la lumière de la source lumineuse est émise en étant dirigée vers la plaque avant, la source lumineuse éclairant de l'extérieur la plaque avant directement ou par un dispositif (10, 11) de guidage de la lumière prévu à cet effet, qui a des moyens pour diriger la lumière de manière inclinée du haut vers la plaque (3, 4) avant en éclairant la plaque avant de l'extérieur, de façon à ce que la plaque avant éclairée soit utilisée comme champ lumineux de l'interrupteur.

2. Interrupteur lumineux suivant la revendication 1, **caractérisé en ce que** la plaque (3, 4) avant est entourée, en outre, au moins en partie d'un cadre (7) et **en ce que** la source lumineuse éclaire aussi le cadre (7) de façon que le cadre aussi agisse en tout ou partie en tant que champ lumineux.

3. Interrupteur lumineux suivant la revendication 1 ou 2, **caractérisé en ce que** la face (22) avant de l'élément (2) d'actionnement n'est pas éclairée.

4. Interrupteur lumineux suivant la revendication 1, **caractérisé en ce que** la face (22) avant de l'élément (2) d'actionnement peut être également éclairée par la source lumineuse ou par une autre source lumineuse distincte.

5. Interrupteur lumineux suivant la revendication 4, **caractérisé en ce que** l'éclairage de la plaque (3, 4) avant, et au besoin du cadre, s'effectue indépendamment de la position de l'interrupteur et l'activation de l'éclairage de la face (22) avant de l'élément (2) d'actionnement s'effectue en fonction de l'actionnement de l'élément (2) d'actionnement.

6. Interrupteur lumineux suivant l'une des revendications 1 à 5, **caractérisé en ce que** l'éclairage de la plaque (3, 4) avant et, en cas de besoin, du cadre (7) s'effectue sensiblement sur toute la surface ou **en ce que** seules des parties de la surface de la plaque avant ou du cadre sont éclairées.

7. Interrupteur lumineux suivant l'une des revendications 1 à 6, **caractérisé en ce que** la plaque avant ou le cadre éclairé sont éclairés uniformément ou non uniformément, notamment avec des modèles ou des inscriptions produits par l'éclairage.

8. Interrupteur lumineux suivant l'une des revendications 1 à 7, **caractérisé en ce que** le dispositif (10) de guidage de la lumière émet la lumière pour l'éclairage de la plaque (3, 4) avant, et s'il en est besoin du cadre (7), sur la paroi (20) latérale de l'élément (2) d'actionnement.

9. Interrupteur lumineux suivant la revendication 8, **caractérisé en ce que** la lumière est émise le long de tout le pourtour de l'élément (2) d'actionnement ou seulement le long d'une partie du pourtour de l'élément '(2) d'actionnement.

10. Interrupteur lumineux suivant l'une des revendications 1 à 9, **caractérisé en ce que** le dispositif de guidage de la lumière comprend une fibre optique (10).

11. Interrupteur lumineux suivant la revendication 10, **caractérisé en ce que** la fibre optique (10) forme une partie de l'élément (2) d'actionnement et notamment au moins un élément (16, 17) fonctionnel pour l'actionnement de la pièce d'actionnement.

12. Interrupteur lumineux suivant la revendication 10 ou 11, **caractérisé en ce que** la fibre optique (10) forme, ensemble avec un couvercle (12) qui forme la face (22) avant de l'élément d'actionnement et le cas échéant avec une couche (11) interposée entre la fibre optique (10) et le couvercle (12), l'élément (2) d'actionnement.

13. Interrupteur lumineux suivant la revendication 12, **caractérisé en ce que** la couche (11) est constituée pour réfléchir de la lumière vers la fibre optique (10).

14. Interrupteur lumineux suivant l'une des revendications 10 à 13, **caractérisé en ce que** la fibre optique (10) a les moyens pour diriger la lumière de manière inclinée depuis le haut vers la plaque (3, 4) avant et, s'il en est besoin, vers le cadre (7).

15. Interrupteur lumineux suivant la revendication 14, **caractérisé en ce que** la fibre optique (10) a, comme moyen pour diriger la lumière sur sa face supérieure voisine de la plaque (3, 4) avant, un biseau (15).

16. Interrupteur lumineux suivant l'une des revendications 1 à 15, **caractérisé en ce que** la source lumineux est une diode luminescente, notamment une diode luminescente éclairant dans le bleu, dont la lumière est introduite notamment par un moyen (18) de couplage dans le dispositif de guidage de la lumière en étant introduite notamment au moyen d'une lentille (18) de Fresnel dans une fibre optique (10).

17. Interrupteur lumineux suivant l'une des revendications 1 à 16, **caractérisé en ce que** la source lumineuse et/ou le dispositif de guidage de la lumière, qui comprend notamment une fibre optique, a des moyens de réfraction de la lumière, notamment des prismes, grâce à quoi un modèle en plusieurs couleurs peut être produit sur la plaque avant et, s'il en est besoin, sur le cadre.
